Europäisches Patentamt

European Patent Office

Office européen des brevets

(19)

(11) Veröffentlichungsnummer: **0 012 330**
**B1**

## (12) EUROPÄISCHE PATENTSCHRIFT

(45) Veröffentlichungstag der Patentschrift:
09.02.83

(21) Anmeldenummer: **79104907.5**

(22) Anmeldetag: **04.12.79**

(51) Int. Cl.³: **G 21 K 5/10,** H 01 B 13/00,
B 65 H 51/00

(54) **Vorrichtung zur Führung und Förderung von aufwickelbaren Produkten durch ein Elektronen-Bestrahlungsfeld.**

(30) Priorität: **14.12.78 DE 7836998 U**

(43) Veröffentlichungstag der Anmeldung:
**25.06.80 Patentblatt 80/13**

(45) Bekanntmachung des Hinweises auf die Patenterteilung:
**09.02.83 Patentblatt 83/6**

(84) Benannte Vertragsstaaten:
**AT BE CH FR SE**

(56) Entgegenhaltungen:
**CH-A-539 932**
**DE-A-2 058 044**
**DE-B-1 046 789**
**FR-A-1 145 421**
**FR-A-2 240 634**
**FR-A-2 252 637**
**GB-A-805 818**
**GB-A-805 819**
**US-A-2 858 442**
**US-A-3 564 238**
**US-A-3 911 281**
**US-A-3 925 671**
**US-A-3 980 251**

(73) Patentinhaber: **Licentia Patent-Verwaltungs-GmbH,**
**Theodor-Stern-Kai 1, D-6000 Frankfurt/Main 70 (DE)**

(72) Erfinder: **Hofmann, Ernst-Günter, Dr.rer.nat.,**
**Rudolf-Kinau-Weg 3, D-2000 Wedel (DE)**
Erfinder: **Meier, Bernd, Ing.-grad., Kroonhorst 58,**
**D-2000 Hamburg 53 (DE)**
Erfinder: **Tauber, Manfred, Dr.rer.nat., Im Sande 11,**
**D-2081 Holm (DE)**

(74) Vertreter: **Schickle, Gerhard, Dipl.-Ing., Licentia**
**Patent-Verwaltungs-GmbH Theodor-Stern-Kai 1,**
**D-6000 Frankfurt/Main 70 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Vorrichtung zur Führung und Förderung von aufwickelbaren Produkten durch ein Elektronen-Bestrahlungsfeld

Die Erfindung betrifft eine Vorrichtung zur Führung und Förderung von aufwickelbaren Produkten, insbesondere von Kabeln, Leitungen, flexiblen Rohren, Schläuchen oder Bahnenware unterschiedlicher Abmessungen, durch ein Elektronen-Bestrahlungsfeld zum mindestens zweimaligen Durchlauf des zu bestrahlenden Produktes durch das Bestrahlungsfeld unter Verwendung von im Abstand zueinander gehaltenen Paaren äußerer und innerer Umlenktrommeln, deren Achsen zueinander parallel verlaufen und die eine Führung und Förderung der aufwickelbaren Produkte in einer oder mehreren Bestrahlungsebenen ermöglichen, sowie mit Vorrichtungen zum Zentrieren der Produkte.

Es sind die verschiedenartigsten Vorrichtungen zur Strahlenbehandlung von Produkten, die in den letzten zehn Jahren zu einem bedeutenden Fertigungsverfahren in der modernen Chemie, Technik und Medizin geworden ist, allgemein bekannt, bei denen als Strahlenquellen für industrielle Prozesse hauptsächlich Elektronenbeschleuniger in Betracht kommen (Prospekt der Firma AEG-TELEFUNKEN »Zentrum für industrielle Bestrahlung«).

Bei den in dem Prospekt beschriebenen Vorrichtungen erfolgt die Bestrahlung von Kabeln, Leitungen, flexiblen Rohren und Schläuchen über Rollensätze, deren Rollendurchmesser und Rollenabstand individuell an das jeweilige Produkt angepaßt werden muß, um eine optimale Ausnutzung des Strahlenfeldes zu gewährleisten. Da dies jedoch mit hohen Kosten verbunden ist, werden üblicherweise Rollensätze mit unterschiedlichen Abmessungen für abgestufte Produktbereiche verwendet. Jeder Rollensatz liefert dann nur für einen, nämlich den größten Durchmesser des jeweiligen Produktes eine optimale Ausnutzung des Strahlenfeldes. Kleinere Durchmesser können zwar auch bestrahlt werden, jedoch ist hier eine Ausnutzung des Strahlenfeldes zunehmend schlechter. Es sind Rollensätze bekannt, die das Produkt 0-förmig (Raceway-Technik) bzw. 8-förmig (Figure-8-Technik) führen.

Bei allen Produktführungssystemen mit Rollensätzen bestimmt die Produktführung und das zu bestrahlende Produkt die einzustellende Strahlenenergie. Hierbei ist es nachteilig, daß die installierten Beschleuniger oft nicht, wie es aus wirtschaftlichen Gründen eigentlich erforderlich wäre, mit ihrer maximalen Spannung sondern nur mit einer niedrigeren Spannung betrieben werden, weil — insbesondere bei Produkten mit kleinem mittleren Flächengewicht (bezogen auf das bei maximaler Strahlenenergie durchstrahlbare Flächengewicht) — die größere Tiefenwirkung der höherenergetischen Elektronenstrahlung überhaupt nicht ausgenutzt werden könnte. Zudem sind derartige Rollensätze für Folien- und Bahnenwaren nicht brauchbar. Hier muß gegebenenfalls mit gesonderten Produktführungssystemen gearbeitet werden.

Es ist ein Verfahren und eine Vorrichtung zur Behandlung fester Materialien mit Stark- bzw. Hochenergieelektronen bekannt, wobei der zu bestrahlenede Körper in einem Elektronenstrahl angeordnet oder durch ihn hindurchbewegt wird (DE-B-1 046 789). Zur Führung des Körpers durch das Elektronenfeld weist die Vorrichtung mit Laufrillen zur Aufnahme des Körpers versehene Rollen auf. Es handelt sich hierbei um im Abstand zueinander gehaltene äußere und innere Umlenktrommeln, die zwischen zwei parallelen Platten angeordnet sind. Die Platten werden mittels einer horizontalen Platte und eines Abstandshalters in Abstand zueinander gehalten. Auch diese Vorrichtung ist somit mit vorgegebenen Rollen nur für einen Körper mit vorgegebenen Abmessungen verwendbar. Körper mit anderen Abmessungen machen den Einsatz anderer Rollen und somit einen kostspieligen Rollenwechsel erforderlich.

Bekannt ist auch eine Einrichtung zum Umlenken und Verdrehen von Kabeladern, insbesondere solchen mit großen Querschnitten, die annähernd allseitig hochenergetisch bestrahlt werden sollen, unter Anwendung von mehreren Rollenpaaren mit Führungsnuten (DE-A-2 058 044). Auf einem ortsveränderlichen, arretierbaren Gestell sind hintereinander mehrere mit Führungsnuten versehene, antriebslose Führungsrollen und Umlenkrollen in unterschiedlicher und zueinander veränderlicher Höhe angeordnet, wobei die Führungsrollen von Kühleinrichtungen umgeben sind und die Umlenkrollen in einem Schwenkrahmen gelagert sind. An den Ein- und Auslaufstellen der Kabeladern besitzen die Umlenkrollen Gegendruckrollen aus Plaste, die in die U-förmigen Führungsnuten hineinragen und bis an den Kreisbogen verstellbar sind.

In einer Bestrahlungskammer sind jeweils zwei der obenbeschriebenen und als Böcke wirkenden Gestelle unter einem Strahlenaustrittsfenster derart fahr- und arretierbar angeordnet, daß im Abstand zueinander gehaltende Paare äußerer und innerer Umlenktrommeln vorhanden sind.

Die obengenannten Nachteile treffen auch auf diese bekannte Einrichtung zu.

Weiterhin ist eine Bestrahlungseinrichtung für Bahnwaren bekannt, die drei Umlenkrollen und drei Wendeglieder für die zu bestrahlende Bahnware aufweist (GB-A-805 818). Durch die Umlenkrollen und Wendeglieder wird die Bahnware derart umgelenkt und geführt, daß die Bahnware in zwei nebeneinanderliegenden Bestrahlungsebenen unter der Bestrahlungseinrichtung vorbeigeführt wird. Besondere Zentriervorrichtungen sind bei dieser bekannten Bestrahlungseinrichtung ebensowenig vorgesehen, wie bei der aus der US-A-3 564 238 bekannten Bestrahlungseinrichtung, die eine mit mehreren Umlenkrollen versehene Einrichtung zur Umlenkung und Bestrahlung von Materialien in mehreren Ebenen betrifft.

Der Erfindung liegt die Aufgabe zugrunde, eine Vorrichtung zur Führung und Förderung von aufwickelbaren Produkten durch ein Elektronen-Bestrahlungsfeld zu schaffen, durch die eine optimale Ausnutzung des Strahlenfeldes sowie ein wirtschaftlicher Betrieb des Elektronenbeschleunigers sichergestellt ist und die eine Bestrahlung von Produkten mit unterschiedlichen Abmessungen ermöglicht, ohne daß für die einzelnen Produkte ein Auswechseln der Umlenktrommeln erforderlich ist.

Die Aufgabe wird gemäß der Erfindung durch die kennzeichnenden Merkmale von Anspruch 1 gelöst.

Ausgestaltungen der Erfindung sind in den Unteransprüchen 2 bis 7 beschrieben.

Ein Vorteil der Erfindung ist in der universellen Verwendbarkeit der Vorrichtung für die eingangs genannten Produkte unterschiedlicher Abmessungen zu sehen. Das zu bestrahlende Produkt wird vorteilhafterweise beim Hin- und Rücklauf gewendet und in einer Bestrahlungsebene oder in geringem Abstand voneinander in zwei benachbarten Bestrahlungsebenen bestrahlt. Es ist möglich, das Produkt mehrfach um die Umlenktrommeln und durch das Strahlungsfeld zu führen. Die auswechselbaren Zentriervorrichtungen bzw. Kammleisten übernehmen während des Durchlaufs die genaue Führung des zu bestrahlenden Produktes. Durch geeignete Wahl der Zentriervorrichtungen bzw. von Breite und Abstand der Kammzähne der Kammleisten kann die Produktführung vorteilhafterweise an die Abmessungen des jeweiligen Produktes, die maximalen Beschleunigungsdaten (Strahlenenergie und Strahlstrom) angepaßt und somit eine optimale Nutzung der erzeugten Strahlung in Hinblick auf Eindringstufe und Fläche erzielt werden. Weiterhin ist eine Optimierung hinsichtlich der Strahlenausnutzung durch Auswechseln der Zentriervorrichtungen bzw. Kammleisten möglich.

Ein weiterer Vorteil besteht darin, daß ein Produkttransport mit unterschiedlichen Geschwindigkeiten infolge der variierbaren Drehzahlen der motorisch angetriebenen Umlenktrommeln durchführbar ist. Durch die vorgesehenen Kühleinrichtungen für die Umlenktrommeln wird eine jeweils maximale Produktgeschwindigkeit ermöglicht, da diese Kühleinrichtungen einen Abbau der strahlenbedingten Erwärmung des Produktes bewirken.

In der Zeichnung sind zwei Ausführungsbeispiele nach der Erfindung dargestellt, und zwar zeigt

Fig. 1 eine Gesamtansicht einer ersten erfindungsgemäßen Vorrichtung,

Fig. 2 eine perspektivische Draufsicht auf zwei Umlenktrommeln und

Fig. 3a und 3b jeweils ein zu bestrahlendes Produkt in zwei Bestrahlungsebenen in Vorderansicht im Schnitt.

Fig. 4 ein zweites Ausführungsbeispiel der Erfindung.

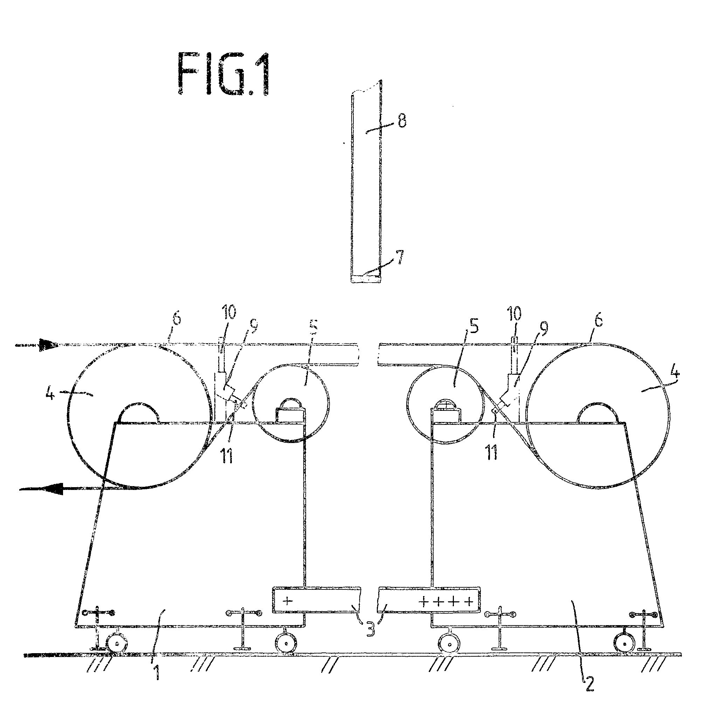

In Fig. 1 sind zwei symmetrisch aufgebaute Böcke 1 und 2 mittels eines Abstandshalters 3 zu einer mechanischen Einheit fest verbunden. Diese Böcke ruhen auf nicht näher bezeichneten Rollen und können mittels ebenfalls nicht bezeichneten Feststellschrauben aufgebockt oder festgesetzt werden. An seiner Oberseite weist jeder Bock zwei drehbeweglich gelagerte Umlenktrommeln 4 und 5 auf, deren Achsen alle zueinander parallel verlaufen. Die äußeren Umlenktrommeln 4 haben einen größeren Durchmesser als die direkt benachbart angeordneten Umlenktrommeln 5 bei Böcke 1 und 2 und heben das zu bestrahlende Produkt 6, beispielsweise ein flexibles Rohr oder Kabel, in eine erste Bestrahlungsebene an. Diese Bestrahlungsebene liegt direkt unter dem Elektronenaustrittsfenster 7 eines Ablenksystems 8 eines nicht dargestellten Elektronenbeschleunigers. Die Produktzuführung bzw. -abführung ist durch Pfeile gekennzeichnet und erfolgt mit Hilfe von handelsüblichen Auf- und Abwickelvorrichtungen, die aus Fig. 1 nicht zu entnehmen sind. Der Verlauf des Produktes 6 ist durch die Umlenktrommeln 4 und 5, die durch weitere ergänzt werden können, bestimmt und ergibt sich daraus, daß das zunächst von der äußeren Umlenktrommel 4 des linken Bockes 1 durch die erste Bestrahlungsebene zur äußeren Umlenktrommel 4 des rechten Bockes 2 geführt ist. Die äußere Umlenktrommel 4 des Bockes 2 lenkt das Produkt 6 in Richtung der kleineren Umlenktrommel 5 desselben Bockes um, die das Produkt zusammen mit der kleineren Umlenktrommel 5 des linken Bockes 1 in eine zweite Bestrahlungsebene anhebt. Die zweite Bestrahlungsebene liegt unmittelbar unter der ersten Bestrahlungsebene. Von der zuletzt genannten Umlenktrommel 5 wird das Produkt 6 auf die untere Mantelfläche der äußeren Umlenktrommel 4 des Bockes 1 gelenkt, von wo aus es an eine Produktaufwickelvorrichtung weitergegeben werden kann. Dies ist vornehmlich bei Bahnenware der Fall. Das Produkt 6 wird somit durch die Umlenktrommeln 4 und 5 beider Böcke 1 und 2 bei Hin- und Rücklauf gewendet und in geringerem Abstand voneinander in zwei benachbarten Bestrahlungsebenen durch das Strahlenfeld des Elektronenbeschleunigers geführt.

Der Abstand der Böcke 1 und 2 voneinander ist so gewählt, daß die inneren Umlenktrommeln 5 beider Böcke außerhalb der Primärstrahlung liegen. Die Länge der Umlenktrommeln ist zweckmäßigerweise der jeweiligen Ablenkweite des verwendeten Beschleunigers bzw. an die Strahlenfeldbreite senkrecht zur Produktlaufrichtung angepaßt. Es ist vorgesehen, eine äußere Umlenktrommel 4 eines Bockes 1 oder 2 oder beide äußeren Umlenktrommeln 4 durch einen Motor synchron anzutreiben. Um das Produkt 6 mit unterschiedlichen, eine optimale Strahlenausnutzung mit sich bringenden Geschwindigkeiten zu fördern, ist die Drehzahl der angetriebenen Umlenktrommeln 4 variierbar, gegebenenfalls auch synchron zum Strahlstrom des Beschleunigers regelbar. Weiterhin können die Umlenktrommeln Kühleinrichtungen aufweisen, die einen Abbau der durch die Bestrahlung hervorgerufenen Erwärmung des Produktes 6 bewirken und somit eine maximale Produktgeschwindigkeit ermöglichen. Gekühlte Umlenktrommeln 4 und 5 lassen sich beispielsweise dadurch erreichen, daß die Umlenktrommeln als an ihren Stirnwänden offene Hohltrommeln ausgeführt sind. Im Hohlraum jeder Umlenktrommel sind Leitschaufeln angeordnet, die bei einer Drehbewegung Luft aus dem die Umlenktrommeln umgebenden Raum ansaugen, die angesaugte Luft durch den Hohlraum befördern und somit eine Kühlung der Umlenktrommel bewirken. Eine andere Möglichkeit besteht darin, daß die Umlenktrommeln als an ihren Stirnseiten offene oder teilweise verschlossene Halbtrommeln ausgebildet sind. In dem Hohlraum jeder Umlenktrommel ist ein rohrförmiger Körper angeordnet, dessen Außenwandung eine oder mehrere Öffnungen aufweist. Die Öffnungen verbinden den Innenraum des rohrförmigen Körpers mit dem Hohlraum der zugehörenden Umlenktrommel. Eine Kühlung derselben wird durch Zufuhr eines Kühlmittels, z. B. Luft, in den Innenraum des rohrförmigen Körpers und Austritt aus einer oder beiden Stirnseiten der Umlenktrommel erzielt. Es ist denkbar, die beiden oben beschriebenen Kühleinrichtungen für verschiedene Umlenktrommeln 4 oder 5 in einer Vorrichtung gemeinsam zu verwenden. .

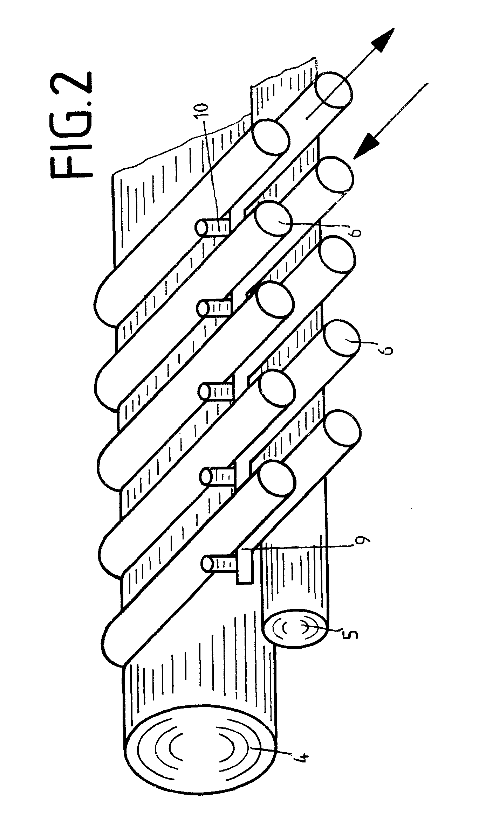

Ist die Bestrahlung von Kabeln, Leitungen, flexiblen Rohren oder Schläuchen mit der in Fig. 1 dargestellten Vorrichtung vorgesehen, so kann eine Mehrfach-Bestrahlung dieser Produkte dadurch erreicht werden, daß das zu bestrahlende Produkt 6 mehrfach um die Umlenktrommeln 4 und 5 durch das Strahlenfeld geführt wird. Um einen einwandfreien Durchlauf und eine gleichmäßige Bestrahlung sowohl in der ersten als auch in der zweiten Bestrahlungsebene sicherzustellen, sind zwischen den Umlenktrommeln 4 und 5 beider Böcke 1 und 2 Zentriervorrichtungen vorgesehen. Im vorliegenden Beispiel sind die Zentriervorrichtungen als Kammleisten 9 ausgebildet, die jeweils zwei Reihen von Kammzähnen 10 bzw. 11 aufweisen. Die Kammzahnreihen 10 und 11 einer Kammleiste 9 sind zueinander unter einem vorgegebenen Winkel derart angeordnet, daß die Kammzahnreihen 10 für den Hinlauf und die Kammzahnreihen 11 für den Rücklauf eine exakte Führung und Abstandshaltung des Produktes 6 gewährleisten. Dieses ist aus der perspektivischen Draufsicht der Fig. 2 für die Kammzahnreihe 10 deutlich zu entnehmen.

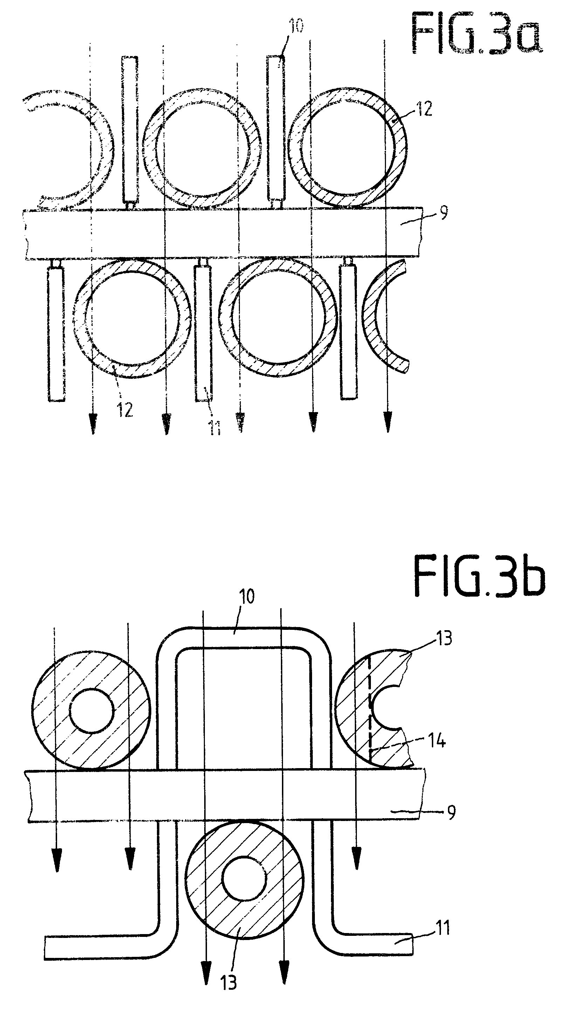

Durch auswechselbare Kammleisten und/oder durch die Verwendung von Kammleisten bei denen die Breite der Kammzähne und die Abstände zwischen den Kammzähnen einer Kammleiste einstellbar sind, kann die Vorrichtung an unterschiedliche Abmessungen aufweisende Produkte und an die maximalen Beschleunigungsdaten, wie z. B. Strahlenenergie und Strahlstrom, angepaßt werden. Es wird somit eine optimale Nutzung der Strahlungsenergie in der ersten und zweiten Bestrahlungsebene erzielt. In den Fig. 3a und 3b ist jeweils ein Ausschnitt einer Kammleiste 9 dargestellt, deren Kammzähne 10 bzw. 11 ein rohrförmiges Produkt 12 bzw. 13 beim Hin- bzw. Rücklauf auf Abstand halten und führen. In Fig. 3a wird z. B. ein — bezogen auf die gewählte Strahlenenergie — dünnwandiger Schlauch 12 bestrahlt, durch dessen Wandung die durch Pfeile angedeutete Strahlung noch zu einem großen Teil austreten kann und dieser Teil in der zweiten Ebene zur nochmaligen Bestrahlung der rücklaufenden Schläuche verwendet wird. Bei diesem Beispiel können sich die Schläuche in der ersten und zweiten Bestrahlungsebene in der dargestellten Weise überlappen, wodurch eine optimale Transportgeschwindigkeit bei optimaler (max.) Beschleunigerenergie möglich wird. Hingegen müssen bei — bezogen auf die gewählte Strahlenenergie — dickwandigen rohrförmigen Produkten oder bei Kabeln mit — bezogen auf die gewählte Strahlenenergie E — dickwandiger Isolation, beispielsweise dem in Fig. 3b mit 13 bezeichneten Produkt, die hin- und rücklaufenden Produktenden durch die Kammzähne 10 bzw. 11 in den beiden Bestrahlungsebenen zueinander geführt werden. Hier wäre es sogar möglich, die zweite Bestrahlungsebene mit der ersten zusammenfallen zu lassen. Ein in o. g. Sinn »dickwandiges« Produkt liegt in der Regel vor, wenn für die Senentangente s (14) die Beziehung

$$0{,}30 \ \frac{E\,(\mathrm{MeV})}{\rho\,(\mathrm{g}/3\,\mathrm{cm}^3)} \leqq s\,[\mathrm{cm}] \leqq 0{,}8 \ \frac{E\,(\mathrm{MeV})}{\rho\,(\mathrm{g}/\mathrm{cm}^3)}$$

erfüllt ist, wobei $\varrho =$ Dichte des Rohr- bzw. Isolationsmaterials ist. Bei der Bestrahlung von Bahnenware (oder Folien) können die genannten Kammleisten gegen geeignete Zentriervorrichtungen ausgewechselt werden.

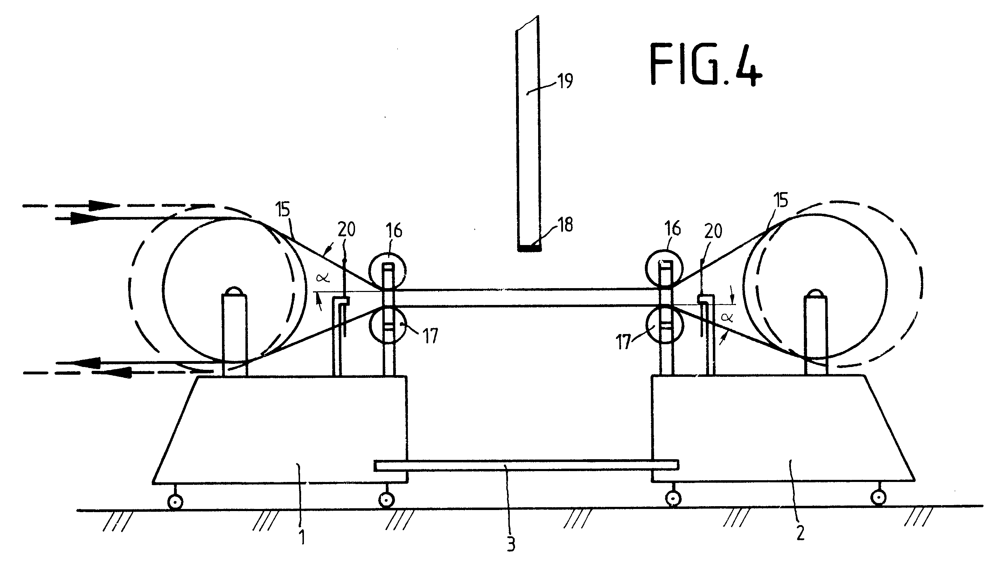

In Fig. 4 ist ein zweites Ausführungsbeispiel der erfindungsgemäßen Vorrichtung dargestellt. Die Böcke 1 und 2 sind auch hier mittels eines Abstandshalters 3 zu einer mechanischen Einheit fest verbunden. An seiner Oberseite weist jeder Bock jedoch frei beweglich gelagerte Umlenktrommeln 15, 16, 17 auf, deren Achsen alle parallel zueinander verlaufen. Die äußeren Umlenktrommeln 15 haben einen größeren Durchmesser als die direkt übereinander angeordneten Umlenktrommeln 16, 17 der beiden Böcke 1 und 2. Die Trommeln 15 sind austauschbar. Ihr Durchmesser kann somit an die jeweils zulässige Biegebeanspruchung des zu bestrahlenden Produktes angepaßt werden. Trommeln unterschiedlicher Durchmesser werden dabei symmetrisch zu den beiden kleineren Umlenktrommeln 16 und 17 eines jeden Bockes gelagert und mit zunehmendem Trommeldurchmesser nach außen versetzt. Dabei wird der Umlenkwinkel $\alpha$ der Trommeln 16 und 17 näherungsweise konstant gehalten, vorzugsweise auf einen Winkel $\leqq 45°$. Die beiden letztgenannten Umlenktrommeln 16 und 17 haben vorzugsweise den gleichen Durchmesser.

Das Produkt läuft bei dieser Vorrichtung über die Trommel 15 des Bockes 1 von der nicht gezeichneten Abwickelvorrichtung ein, wird dann über Trommel 15 und 16 des Bockes 1 auf eine Bestrahlungsebene direkt unter dem Elektronenstrahlfenster 18 des Ablenksystems 19 eines nicht dargestellten Elektronenbeschleunigers eingebracht und läuft dann über die Umlenktrommeln 16, 15 und 17 des Bockes 2 in einer geringfügig tiefer liegenden Ebene und von dort über die Trommeln 17 und 15 des Bockes zurück. Je nach Produktart erfolgt von dort der direkte Rücklauf zur Aufwickelvorrichtung (im Falle von Bahnenware) bzw. im Falle von Kabeln, Schläuchen, Leitungen u. dgl. ein Rücklauf zum Aufwickelsystem erst nach vorangegangenem mehrmaligem Durchlauf um die Gesamtvorrichtung.

Bei Kabeln und Leitungen sowie flexiblen Schläuchen, Rohren und Profilen dienen, wie im Fall des ersten Ausführungsbeispieles, auswechselbare Kammleisten 20 zur exakten Führung der Produkte auf dem System. Auch hier wird, wie oben beschrieben, der Zahnabstand und die Zahnbreite der auswechselbaren Kammleisten an das jeweilige Produkt angepaßt. Bei Bestrahlung von Bahnenware können die Kammleisten gegen Zentriervorrichtungen für den exakten Lauf der Bahnen ausgetauscht werden. Das System hat gegenüber dem erstgenannten System den Vorteil, daß die Trommeln 15 mit Umschlingungswinkeln > 180° ohne Änderung des übrigen Systems an die jeweils zulässigen Biegeradien des zu bestrahlenden Produktes angepaßt werden können.

Alle übrigen bereits oben gemachten Ausführungen gelten analog. Es ist selbstverständlich, daß hiermit die Möglichkeiten zur konstruktiven Gestaltung einer Bestrahlungsvorrichtung für aufwickelbare Produkte nicht erschöpft sind, sondern daß auch eine andere konstruktive Gestaltung gemäß dem Erfindungsgedanken möglich ist.

Die erfindungsgemäße Vorrichtung ermöglicht es, durch die spezielle Produktführung durch das Strahlenfeld die begrenzte Eindringtiefe von Elektronenstrahlen je nach dem zu bestrahlenden Produkt optimal für den Bestrahlungsvorgang auszunutzen. Die Strahlenbehandlung von Kabel- und Leitungsisolation, flexiblen Schläuchen und Rohren und Folien bzw. Bahnenware sowie Profilen steht hierbei mit im Vordergrund des Interesses.

**Patentansprüche**

1. Vorrichtung zur Führung und Förderung von aufwickelbaren Produkten (6, 12, 13), insbesondere von Kabeln, Leitungen, flexiblen Rohren, Schläuchen oder Bahnenware unterschiedlicher Abmessungen, durch ein Elektronen-Bestrahlungsfeld zum mindestens zweimaligen Durchlauf des zu bestrahlenden Produktes (6, 12, 13) durch das Bestrahlungsfeld unter Verwendung von im Abstand zueinander gehaltenen Paaren äußerer und innerer Umlenktrommeln (4, 5, 15, 16, 17), deren Achsen zueinander parallel verlaufen und die eine Führung und Förderung der aufwickelbaren Produkte (6, 12, 13) in einer oder mehreren Bestrahlungsebenen ermöglichen, sowie mit Vorrichtungen zum Zentrieren der Produkte, dadurch gekennzeichnet, daß zwei durch einen oder mehrere Abstandshalter (3) zu einer mechanischen Einheit fest verbundene, die Umlenktrommel aufnehmende Böcke (1, 2) vorgesehen sind, daß die äußere Umlenktrommel (4, 15) jeden Bockes (1, 2) das zu bestrahlende Produkt (6, 12, 13) in einer ersten Bestrahlungsebene führt, daß die innere Umlenktrommel (5, 16, 17) jeden Bockes (1, 2) zur Führung des zu bestrahlenden Produktes (6, 12, 13) in einer unterhalb der ersten Bestrahlungsebene eng benachbart verlaufenden oder mit dieser zusammenfallenden zweiten Bestrahlungsebene dient, und daß zwischen den Umlenktrommeln (4 und 5 bzw. 15 und 16, 17) Zentriervorrichtungen (9, 10, 11, 20) zur exakten Führung des zu bestrahlenden Produktes (6, 12, 13) angeordnet sind, die auswechselbar und/oder an unterschiedliche Abmessungen aufweisende Produkte (6, 12, 13) anpaßbar sind.

2. Vorrichtung nach Anspruch 1, dadurch gekennzeichnet, daß jede Zentriervorrichtung aus einer Kammleiste (9, 20) mit mehreren nebeneinander in vorgegebenen Abständen zueinander liegenden Kammzähnen (10, 11) besteht.

3. Vorrichtung nach Anspruch 2, dadurch gekennzeichnet, daß jede Kammleiste (9) zwei unter einem vorgegebenen Winkel zueinander angeordnete Reihen von Kammzähnen (10 bzw. 11) aufweist und daß eine Kammzahnreihe (10) mit der äußeren Umlenktrommel (4) und die andere Kammzahnreihe (11) mit der inneren Umlenktrommel (5) des zugehörenden Bockes (1 bzw. 2) zusammenwirkt.

4. Vorrichtung nach Anspruch 2 oder 3, dadurch gekennzeichnet, daß die Breite der Kammzähne (10, 11) einer Kammleiste (9, 20) einstellbar sind.

5. Vorrichtung nach Anspruch 1 oder 3, dadurch gekennzeichnet, daß die Umlenktrommeln (4, 5, 15, 16, 17) Kühleinrichtungen aufweisen.

6. Vorrichtungen nach Anspruch 5, dadurch gekennzeichnet, daß die Umlenktrommeln (4, 5, 15, 16, 17) als an ihren Stirnseiten offene Hohltrommeln ausgeführt sind und daß im Hohlraum jeder Umlenktrommel (4, 5) Leitschaufeln zum Ansaugen und Fördern von Luft angeordnet sind.

7. Vorrichtung nach Anspruch 5, dadurch gekennzeichnet, daß die Umlenktrommeln (4, 5, 15, 16, 17) als an ihren Stirnseiten offene oder teilweise verschlossene Hohltrommeln ausgebildet sind, daß in dem Hohlraum jeder Umlenktrommel ein rohrförmiger Körper angeordnet ist, in dessen Innenraum ein Kühlmittel eingeführt wird und dessen Außenwandung eine oder mehrere Öffnungen aufweist, die

0 012 330

den Innenraum des rohrförmigen Körpers mit dem Hohlraum der Umlenktrommel (4, 5, 15, 16) verbinden.

## Claims

1. An arrangement for the guiding and conveying of windable products (6, 12, 13), especially cables, wires, flexible pipes, tubes or web-type goods of differing dimensions, through an electron radiation field with at least two passages of the product to be irradiated (6, 12, 3) through the radiation field and employing pairs of outer an inner guide drums (4, 5, 15, 16, 17) held at a spacing from each other, the axes of which run parallel to each other, and which facilitates guiding and conveying of the windable product (6, 12, 13) in one or more radiation planes, as well as arrangements for centering the products, characterised in that there are provided two supports (1, 2), which are firmyl connected by means of one or more spacers (3) to a mechanical unit and which carry the guide drums, that the outer guide drum (4, 15) of each support (1, 2) guides the product to be irradiated (6, 12, 13) in a first radiation plane, that the inner guide drum (5, 16, 17) of each support (1, 2) serves to guide the product to be irradiated (6, 12, 13) in a second radiation plane which is beneath the first radiation plane and runs closely adjacent or is coincident therewith, and that between the guide drums (4 and 5, or 15 and 16, 17) there are arranged centering devices (9, 10, 11, 20) for the precise guiding of the product to be irradiated (6, 12, 13), which are exchangeable and/or adaptable to products (6,12,13) exhibiting differing dimensions.

2. An arrangement according to claim 1, characterised in that each centering device consists of a comb bar (9, 20) with a plurality of mutually adjacent comb teeth lying at a predetermined spacing from each other.

3. An arrangement according to claim 2, characterised in that each comb bar (9) has two rows of comb teeth (10, 11) arranged at a predetermined angle to each other and that one row of comb teeth (10) co-operates with the outer guide drum (4) and the other row of comb teeth (11) co-operates with the inner guide drum (5) of the associated support (1 or 2).

4. An arrangement according to claim 2 or 3, characterised in that the breadths of the comb teeth (10, 11) of a comb bar (9, 20) are adjustable.

5. An arrangement according to claim 1 or 3, characterised in that the guide drums (4, 5, 15, 16, 17) have cooling arrangements.

6. Arrangements according to claim 5, characterised in that the guide drums (4, 5, 15, 16, 17) are constructed at their front sides as hollow drums and that guide vanes for the drawing in and conveying of air are arranged in the hollow space of each guide drum (4, 5).

7. An arrangement according to claim 5, characterised in that the guide drums (4, 5, 15, 16, 17) are formed on their front sides as open or partly closed hollow drums, that there is arranged in the hollow space of each guide drum a tubular body, into the interior of which a cooling medium is introduced and the outer wall of which has one or more openings which connect the interior of the tubular body with the hollow space of the guide drum (4, 5, 15, 16).

## Revendications

1. Appareil pour guider et transporter des produits (6, 12, 13) susceptibles d'être enroulés, en particulier des câbles, canalisations, tubes flexibles, tuyaux souples ou matières en bandes de différentes dimensions, à travers un champ de bombardement électronique ou champ d'irradiation, afin de faire passer le produit (6, 13, 13) à irradier au moins deux fois à travers ce champ, avec utilisation de paires de tambours de renvoi extérieurs et intérieurs (4, 5, 15, 16, 17) dont lex axes sont parallèles et qui permettent de guider et de transporter les produits (6, 12, 13) en un ou plusieurs plans d'irradiation, ainsi que des dipositifs pour centrer les produits, caractérisé en ce qu'il comprend deux supports ou chevalets (1, 2) portant les tambours de renvoi et reliés rigidement en une unité mécanique par une ou plusieurs entretoises (3), que le tambour extérieur (4, 15) de chaque chevalet (1, 2) guide le produit (6, 12, 13) à irradier dans un premier plan d'irradiation, que le tambour intérieur (5, 16, 17) de chaque chevalet (1, 2) sert au guidage du produit (6, 12, 13) à irradier dans un second plan d'irradiation situé à faible distance sous le premier ou coïncidant avec le premier plan d'irradiation, et en ce que des dispositifs de centrage (9, 10, 11, 20) interchangeables et/ou adaptables à des produits (6, 12, 13) de différentes dimensions sont disposés entre les tambours de renvoi (4 et 5 respectivement 15 et 16, 17) pour le guidage exact du produit (6, 12, 13) à irradier.

2. Appareil selon la revendication 1, caractérisé en ce que chaque dispositif de centrage est formé d'un peigne (9, 20) présentant un certain nombre de dents (10, 11) juxtaposées à des espacements préfixés.

3. Appareil selon la revendication 2, caractérisé en ce que chaque peigne (9) porte deux rangées de dents (10 respectivement 11) formant un angle préfixé entre elles et en ce que l'une des rangées de dents (10) coopère avec le tambour de renvoi exterieur (4) et l'autre rangée de dents (11) coopère avec

6

le tambour de renvoi intérieur (5) du chevalet (1, 2) correspondant.

4. Appareil selon la revendication 2 ou 3, caractérisé en ce que la largeur des dents (10, 11) d'un peigne (9, 20) est réglable.

5. Appareil selon la revendication 1 ou 3, caractérisé en ce que les tambours de renvoi (4, 5, 15, 16, 17) présentent des dispositifs de refroidissement.

6. Appareil selon la revendication 5, caractérisé en ce que les tambours de renvoi (4, 5, 15, 16, 17) sont des tambours creux avec des extrémités ouvertes et en ce que des ailettes pour aspirer et transporter de l'air sont disposées à l'intérieur de chaque tambour (4, 5).

7. Appareil selon la revendication 5, caractérisé en ce que les tambours de renvoi (4, 5, 15, 16, 17) sont des tambours creux avec des extrémités ouvertes ou partiellement fermées et en ce qu'un corps tubulaire est disposé à l'intérieur de chaque tambour, dans lequel on introduit un agent de refroidissement et dont la paroi extérieur présente une ou plusieurs ouvertures qui font communiquer l'intérieur du corps tubulaire avec l'intérieur du tambour (4, 5, 15, 16).

# FIG.1

FIG.2

4

5

9

6

6

6'

10

0 012 330

0 012 330

FIG.3a

FIG.3b

FIG.4